# EUROPEAN PATENT SPECIFICATION

(11) **EP 3 517 823 B1**
(45) Date of publication and mention of the grant of the patent: **02.07.2025**
(21) Application number: 18153509.7
(22) Date of filing: 25.01.2018
(51) Int. Cl.: F17C 1/00, F17C 5/06, F17C 6/00, F17C 7/00, F17C 9/00

(54) **FUEL GAS DISTRIBUTION METHOD**
BRENNSTOFFGASVERTEILUNGSVERFAHREN
PROCÉDÉ DE DISTRIBUTION DE GAZ COMBUSTIBLE

(43) Date of publication of application: 31.07.2019
(73) Proprietor: Air Products and Chemicals, Inc., Allentown, PA 18195 (US)
(72) Inventor: Heydorn, Edward Clyde, Macungie, PA Pennsylvania 18062 (US); Bonner, Brian Bernard, Nesquehoning, PA Pennsylvania 18240 (US)
(74) Representative: SSM Sandmair

(56) References cited:
- CA-A1- 2 914 246
- JP-A- 2007 247 729
- US-A1- 2013 240 080
- US-A1- 2014 158 224

## Description

### BACKGROUND

Use of fuel gases such as natural gas and hydrogen as transportation fuels, are gaining greater acceptance. These fuel gases need to be distributed to dispensing stations where the fuel gases are subsequently dispensed to fuel tanks in vehicles, for example, fuel cell vehicles.

Fuel gases are often transported from a fuel gas source in one or more mobile fuel gas storage vessels by a vehicle (i.e. a truck) to a dispensing station. At the dispensing station, the fuel gas is off-loaded, either by transferring the fuel gas from the one or more mobile fuel gas storage vessels to fixed storage vessels at the dispensing station, or by leaving the one or more mobile fuel gas storage vessels at the dispensing station for dispensing fuel gas directly from the one or more mobile fuel gas storage vessels to fuel tanks in vehicles. Distribution of fuel gas is described, for example, in EP 3 249 281, EP 3 249 282, EP 3 263 969, and US 6 786 245.

CA 2 914 246 A1 and JP 2007 247729 A disclose a fuel gas distribution system comprising a mobile fuel gas storage vessel and a transport vehicle for transporting the storage vessel. The transport vehicle is powered by an engine able to use the fuel gas stored in the mobile fuel gas storage vessel as a fuel. The engine is fueled by fuel gas vapor directly from the fuel gas storage vessel without the need for on-board fuel gas storage tanks.

After the fuel gas has been off-loaded, the one or more mobile fuel gas storage vessels are transported back to a refilling station where the one or more mobile fuel gas storage vessels are refilled. A residual amount of fuel gas remains in each of the one or more mobile fuel gas storage vessels when one or more mobile fuel gas storage vessels are transported back to the refilling station. This residual amount of fuel gas is sometimes called the "heel". This residual amount of fuel gas that is transported back to the refilling station represents an inefficiency in the distribution of the fuel gas.

Industry desires greater utilization of fuel gases in the distribution of the fuel gases.

### BRIEF SUMMARY

The present disclosure relates to a fuel gas distribution method. Subject-matter of the invention is a fuel gas distribution method according to claim 1. The sub-claims describe further developments of that method.

### BRIEF DESCRIPTION OF SEVERAL VIEWS OF THE DRAWINGS

FIG. 1 is a schematic illustrating distribution of a fuel gas.
FIG. 2 is a schematic illustrating distribution of a fuel gas.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from the scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

As used herein, "first," "second," "third," etc. are used to distinguish from among a plurality of steps and/or features, and is not indicative of the total number, or relative position in time and/or space unless expressly stated as such.

In the claims, letters may be used to identify claimed steps (e.g. (a), (b), and (c)). These letters are used to aid in referring to the method steps and are not intended to indicate the order in which claimed steps are performed, unless and only to the extent that such order is specifically recited in the claims.

The present disclosure relates to a fuel gas distribution method. A fuel gas is any one of a number of fuels that under ordinary conditions are gaseous. The fuel gas may comprise at least one of hydrogen and methane. The fuel gas may be industrial grade hydrogen having a hydrogen concentration meeting established hydrogen fuel cell purity standards, or for example, at least 99.97 vol.%. The fuel gas may be natural gas comprising methane. The natural gas may have a methane concentration of at least 90 vol.%. The fuel gas may contain natural gas and hydrogen in a gas mixture.

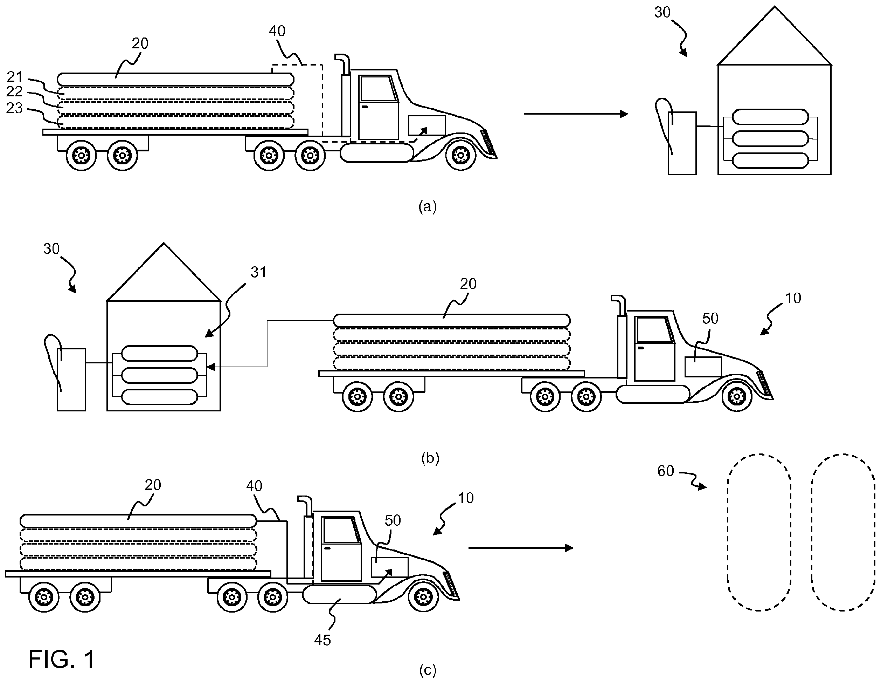

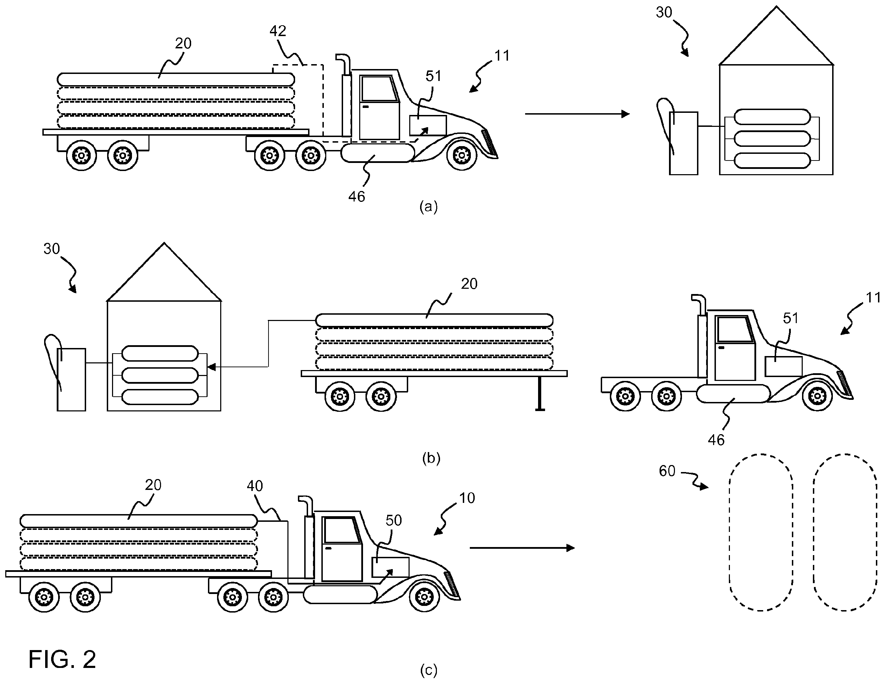

The fuel gas distribution method is described with reference to FIG. 1 and FIG. 2.

The fuel gas distribution method comprises transporting a mobile fuel gas storage vessel 20 to a delivery location. The mobile fuel gas storage vessel 20 may be adapted to store compressed fuel gas. The mobile fuel gas storage vessel 20 may be one of a plurality of physically-connected mobile fuel gas storage vessels 20, 21, 22, and 23, for example, on a tube trailer. The plurality of mobile fuel gas storage vessels may comprise any number of fuel gas storage vessels.

The mobile fuel gas storage vessel 20 may be adapted to store liquid fuel gas. The mobile fuel gas storage vessel may be a fuel gas storage vessel on a trailer, for example, an insulated tanker for carrying liquid fuel gas. When the fuel gas is stored in the mobile fuel gas storage vessel 20 as a liquid fuel gas, a portion of the fuel gas is evaporated to form gaseous fuel gas during transport of the mobile fuel gas storage vessel 20 by the transport vehicle. The liquid fuel gas may be evaporated in an evaporator to form the gaseous fuel gas.

A connection 40 may be provided between the mobile fuel gas storage vessel 20 and the power generator 50 of the transport vehicle 10 for transfer of the gaseous fuel gas from the mobile fuel gas storage vessel 20 to the power generator 50 of the transport vehicle 10. The method may further comprise transferring the gaseous fuel gas from the mobile fuel gas storage vessel 20 to the power generator 50 of the transport vehicle 10 and consuming the gaseous fuel gas to generate power for the transport vehicle 10 while transporting the mobile fuel gas storage vessel 20 to the delivery location. Alternatively or in addition, the method may comprise transferring the gaseous fuel gas from the mobile fuel gas storage vessel 20 to a power generator 50 of the vehicle to generate auxiliary power.

The plurality of mobile fuel gas storage vessels 20, 21, 22, and 23 may have been transported to one or more other delivery locations and fuel gas off-loaded from one or more of the plurality of mobile fuel gas storage vessels 20, 21, 22, and 23 prior to being transported to this delivery location. The plurality of mobile fuel gas storage vessels 20, 21, 22, and 23 may be transported to one or more other delivery locations and fuel gas off-loaded from one or more of the plurality of mobile fuel gas storage vessels 20, 21, 22, and 23 after being transported to this delivery location.

The fuel gas distribution method comprises off-loading fuel gas from the mobile fuel gas storage vessel 20 at the delivery location until the mobile fuel gas storage vessel 20 has been depleted to a depletion level. The fuel gas may be off-loaded to a fuel gas dispensing station 30 at the delivery location. The off-loading may be, for example, carried out by transferring the fuel gas from the mobile fuel gas storage vessel 20 to fixed storage vessels 31 at the delivery location as shown in FIG. 1. The off-loading may be, for example, carried out by leaving the mobile fuel gas storage vessel 20 at the delivery location temporarily as shown in FIG. 2.

As shown in FIG. 1 where the off-loading is carried out by transferring the fuel gas from the mobile fuel gas storage vessel 20 to fixed storage vessels 31 at the delivery location, the step of off-loading comprises operatively connecting the mobile fuel gas storage vessel 20 to one or more fixed storage vessels 31 at the delivery location and transferring fuel gas from the mobile fuel gas storage vessel 20 to the one or moe fixed storage vessels 31 at the delivery location. The one or more fixed storage vessels may be part of a fuel gas dispensing station. The fuel gas may be dispensed from the fuel gas dispensing station to a plurality of receiving vessels, for example fuel tanks of automobiles. The fuel gas may be transferred from the one or more fixed storage vessels to the plurality of receiving vessels.

After off-loading the fuel gas from the mobile fuel gas storage vessel 20 to the depletion level, the mobile fuel gas storage vessel 20 has a residual amount of gaseous fuel gas contained therein. The depletion level is a "causal" depletion level, which is due to a physical limitation of how much fuel gas can be offloaded, for example, by pressure transfer or transfer using a pump/compressor. The residual amount of fuel gas may be decreased using a compressor during off-loading.

Off-loading fuel gas from mobile fuel gas storage vessels to fuel gas dispensing stations is known in the art, for example, from EP 3 249 281, EP 3 249 282, and EP 3 263 969.

Subsequent to off-loading fuel gas from the mobile fuel gas storage vessel 20, the mobile fuel gas storage vessel 20 may be transported by a transport vehicle 10 to a refilling station 60 to be refilled with fuel gas. The mobile fuel gas storage vessel 20 may be refilled with fuel gas at the refilling station 60. The transport vehicle may be, for example, a truck or tractor.

The transport vehicle 10 has an onboard power generator 50 that can utilize the same fuel gas type to generate power for some or all of the requirements of the transport vehicle 10. The power generator 50 can provide power for the powertrain of the transport vehicle and/or auxiliary power.

The transport vehicle may have an electric motor. Hydrogen may be used in a fuel cell to provide electricity for the electric motor. The fuel cell may constitute the power generator 50. The transport vehicle may be supplemented by battery power. The transport vehicle may operate using battery power until the mobile fuel gas storage vessel is depleted to the depletion level and then switch over to using the residual fuel gas. The transport vehicle may operate using fuel gas from a primary fuel gas storage vessel 45 fixed to the transport vehicle. The transport vehicle may operate using fuel gas from the primary fuel gas storage vessel 45 until the mobile fuel gas storage vessel 20 is depleted to the depletion level and then switch over to using the residual fuel gas. The residual fuel gas is transferred from the mobile fuel gas storage vessel 20 to the primary fuel gas storage vessel 45.

The transport vehicle may have an internal combustion engine. Hydrogen or natural gas may be used in the internal combustion engine. The internal combustion engine may constitute the power generator.

The fuel gas distribution method comprises providing a connection 40 between the mobile fuel gas storage vessel 20 containing the residual amount of gaseous fuel gas and a power generator 50 of a transport vehicle 10 for transfer of gaseous fuel gas from the mobile fuel gas storage vessel 20 to the power generator 50 of the transport vehicle 10. The mobile fuel gas storage vessel 20 may be connected directly to the power generator 50 of the transport vehicle 10 or via the primary storage vessel 45.

If the mobile fuel gas storage vessel has been left at the delivery location, as shown in FIG. 2, the mobile fuel gas storage vessel 20 may be connected, after off-loading at the delivery location, to the same transport vehicle that transported the mobile fuel gas storage vessel to the delivery location. The mobile fuel gas storage vessel 20 may alternatively be connected to a different transport vehicle than that which transported the mobile fuel gas storage vessel to the delivery location.

The fuel gas distribution method comprises transporting the mobile fuel gas storage vessel 20 using the transport vehicle 10 while transferring a portion of the residual amount of gaseous fuel gas from the mobile fuel gas storage vessel 20 to the transport vehicle 10 and consuming the portion of the residual amount of gaseous fuel gas in the power generator 50 to generate power for the transport vehicle 10 while transporting the mobile fuel gas storage vessel 20.

The fuel gas distribution method may comprise dispensing fuel gas from the dispensing station 30 to a plurality of receiving vessels (not shown). The receiving vessels may be onboard storage vessels on board respective vehicles (i.e. a fuel tank in an automobile). The fuel gas may be dispensed to the receiving vessels according to any known dispensing method. The dispensing method may comprise cascade filling.

The plurality of physically-connected mobile fuel gas storage vessels 20, 21, 22, and 23 may be transported to a second delivery location using the transport vehicle 10. The fuel gas may be off-loaded to a second fuel gas dispensing station (not shown) at the second delivery location. Fuel gas may be off-loaded from a second mobile fuel gas storage vessel 21 of the plurality of physically-connected mobile fuel gas storage vessels 20, 21, 22, and 23 at the second delivery location.

The fuel gas may be off-loaded until the second mobile fuel gas storage vessel 21 of the plurality of physically-connected mobile fuel gas storage vessels 20, 21, 22, and 23 has been depleted to a depletion level, the second mobile fuel gas storage vessel 21 having a residual amount of fuel gas contained therein. A connection may be provided between the second mobile fuel gas storage vessel 21 containing the residual amount of fuel gas and the power generator of the transport vehicle 10 for transfer of fuel gas from the second mobile fuel gas storage vessel 21 to the power generator 50 of the transport vehicle 10. The mobile fuel gas storage vessel 20 is connected to the power generator 50 of the transport vehicle 10 via the storage vessel 45. The plurality of physically-connected mobile fuel gas storage vessels 20, 21, 22, and 23 may be transported using the transport vehicle 10 while transferring a portion of the residual amount of fuel gas from the second mobile fuel gas storage vessel 21 to the transport vehicle 10 where the transport vehicle 10 consumes the portion of the residual amount of fuel gas in the power generator 50 to generate power for the transport vehicle 10.

As shown in FIG. 2, the mobile fuel gas storage vessel 20 may be transported to the delivery location using a second transport vehicle 11. The step of off-loading fuel gas may comprise detaching the mobile fuel gas storage vessel 20 from the second transport vehicle 11 at the delivery location and operatively connecting the mobile fuel gas storage vessel 20 to a fuel gas receiving coupler at the delivery location.

The fuel gas receiving coupler of the delivery location may be a receiving coupler for a fuel gas dispensing station. The fuel gas may be dispensed from the fuel gas dispensing station to a plurality of receiving vessels where the fuel gas is transferred (directly) from the mobile fuel gas storage vessel to the plurality of receiving vessels via the fuel gas dispensing station (without intermediate storage of the fuel gas in any fixed storage vessels of the fuel gas dispensing station) thereby depleting the fuel gas in the mobile fuel gas storage vessel to the depletion level.

Fuel gas may be dispensed using the well-known cascade filling technique.

After the mobile fuel gas storage vessel 20 has been depleted to a depletion level, the transport vehicle 10 may collect the mobile fuel gas storage vessel 20. The connection 40 may be provided between the mobile fuel gas storage vessel 20 containing the residual amount of gaseous fuel gas and the power generator 50 of the transport vehicle 10. The mobile fuel gas storage vessel 20 may be transported using transport vehicle 10 while transferring a portion of the residual amount of gaseous fuel gas from the mobile fuel gas storage vessel 20 to the transport vehicle 10 and consuming the portion of the residual amount of gaseous fuel gas in the power generator 50 to generate power for the transport vehicle 10.

The mobile fuel gas storage vessel 20 may be adapted to store liquid fuel gas. A portion of the liquid fuel gas may evaporate to form gaseous fuel gas during transport of the mobile fuel gas storage vessel 20 by the second transport vehicle 11 as shown in FIG. 2.

As shown in FIG. 2, a connection 42 may be provided between the mobile fuel gas storage vessel 20 and the power generator 50 of the second transport vehicle 11 for transfer of the gaseous fuel gas from the mobile fuel gas storage vessel 20 to the power generator 51 of the second transport vehicle 11. Gaseous fuel gas may be transferred from the mobile fuel gas storage vessel 20 to the power generator 51 of the second transport vehicle 11 and gaseous fuel gas consumed to generate power for the second transport vehicle 11 while transporting the mobile fuel gas storage vessel 20 to the delivery location. The mobile fuel gas storage vessel 20 may be connected directly to the power generator 51 of the transport vehicle 11 or via the primary storage vessel 46 fixed to the transport vehicle 11.

The fuel gas may be hydrogen. The power generator of the second transport vehicle may comprise a fuel cell. The second transport vehicle may be a fuel cell vehicle.

## Claims

1. A fuel gas distribution method comprising:
transporting a mobile fuel gas storage vessel (20) to a delivery location;
off-loading fuel gas from the mobile fuel gas storage vessel (20) at the delivery location until the mobile fuel gas storage vessel (20) has been depleted to a depletion level, the mobile fuel gas storage vessel (20) having a residual amount of gaseous fuel gas contained therein;
providing a connection (40) between the mobile fuel gas storage vessel (20) and a power generator (50) of a transport vehicle (10) for transfer of gaseous fuel gas from the mobile fuel gas storage vessel (20) to the power generator (50) of the transport vehicle (10); and
transporting the mobile fuel gas storage vessel (20) using the transport vehicle (10) while transferring a portion of the residual amount of gaseous fuel gas from the mobile fuel gas storage vessel (20) to the transport vehicle (10) and consuming the portion of the residual amount of gaseous fuel gas in the power generator (50) to generate power for the transport vehicle (10);
the transport vehicle (10) comprising a primary fuel gas storage vessel (45) which is fixed to the transport vehicle (10);
wherein transferring the portion of the residual amount of fuel gas from the mobile fuel gas storage vessel (20) to the transport vehicle (10) comprises transferring fuel gas from the mobile fuel gas storage vessel (20) to the primary fuel gas storage vessel (45); and
wherein the mobile fuel gas storage vessel (20) is connected to the power generator (50; 51) of the transport vehicle (10; 11) via the primary storage vessel (45; 46) of the transport vehicle (10; 11).

2. The fuel gas distribution method according to claim 1 wherein the fuel gas is off-loaded to a fuel gas dispensing station (30) at the delivery location.

3. The fuel gas distribution method according to claim 2, the method further comprising dispensing fuel gas from the dispensing station (30) to a plurality of receiving vessels;
wherein each receiving vessel of the plurality of receiving vessels is an onboard storage vessel on board a respective vehicle.

4. The fuel gas distribution method according to any one of claims 1 to 3 wherein the mobile fuel gas storage vessel (20) is transported to a refilling station (60) in the step of transporting the mobile fuel gas storage vessel using the transport vehicle (10), the method further comprising:
refilling the mobile fuel gas storage vessel (20) with fuel gas at the refilling station (60).

5. The fuel gas distribution method according to any one of claims 1 to 4 wherein the mobile fuel gas storage vessel (20) is one of a plurality of physically-connected mobile fuel gas storage vessels (20, 21, 22, 23),
wherein the plurality of physically-connected mobile fuel gas storage vessels (20, 21, 22, 23) are transported to a second delivery location using the transport vehicle (10), the method further comprising:
off-loading fuel gas from a second mobile fuel gas storage vessel (21) of the plurality of physically-connected mobile fuel gas storage vessels (20, 21, 22, 23) at the second delivery location.

6. The fuel gas distribution method according to any one of claims 1 to 5 wherein the mobile fuel gas storage vessel (20) is adapted to store liquid fuel gas,
wherein the mobile fuel gas storage vessel (20) is transported to the delivery location by the transport vehicle (10);
wherein a portion of the liquid fuel gas evaporates to form vaporized gaseous fuel gas during transport of the mobile fuel gas storage vessel (20) by the transport vehicle (10); and
wherein the connection (40) is provided between the mobile fuel gas storage vessel (20) and the power generator (50) of the transport vehicle (10) for transfer of gaseous fuel gas from the mobile fuel gas storage vessel (20) to the power generator (50) of the transport vehicle (10);
the method further comprising:
transferring the vaporized gaseous fuel gas from the mobile fuel gas storage vessel (20) to the power generator (50) of the transport vehicle (10) and consuming the vaporized gaseous fuel gas to generate power for the transport vehicle (10) while transporting the mobile fuel gas storage vessel (20) to the delivery location.

7. The fuel gas distribution method according to any one of claims 1 to 5
wherein the mobile fuel gas storage vessel (20) is transported to the delivery location using a second transport vehicle (11);
wherein the step of off-loading fuel gas comprises:
detaching the mobile fuel gas storage vessel (20) from the second transport vehicle (11) at the delivery location; and
operatively connecting the mobile fuel gas storage vessel (20) to a fuel gas receiving coupler at the delivery location.

8. The fuel gas distribution method according to claim 7 wherein the mobile fuel gas storage vessel (20) is adapted to store liquid fuel gas,
wherein a portion of the liquid fuel gas evaporates to form vaporized gaseous fuel gas during transport of the mobile fuel gas storage vessel (20) by the second transport vehicle (11); the method further comprising:
providing a connection (42) between the mobile fuel gas storage vessel (20) and a power generator (51) of the second transport vehicle (11) for transfer of the vaporized gaseous fuel gas from the mobile fuel gas storage vessel (20) to the power generator (51) of the second transport vehicle (11); and
transferring the vaporized gaseous fuel gas from the mobile fuel gas storage vessel (20) to the power generator (51) of the second transport vehicle (11) and consuming the vaporized gaseous fuel gas to generate power for the second transport vehicle (11) while transporting the mobile fuel gas storage vessel (20) to the delivery location.

9. The fuel gas distribution method according to any one of claims 1 to 8 wherein the step of off-loading fuel gas comprises:
operatively connecting the mobile fuel gas storage vessel (20) to one or more fixed storage vessels (31) at the delivery location; and
transferring fuel gas from the mobile fuel gas storage vessel (20) to the one or more fixed storage vessels (31) at the delivery location.

10. The fuel gas distribution method according to any one of claims 1 to 9 wherein the power generator (50) is an internal combustion engine for driving the transport vehicle (10) and/or generating electric power for operating one or more electric components of the transport vehicle (10).

11. The fuel gas distribution method according to any one of claims 1 to 10 wherein the power generator (50) is a fuel cell for generating electric power for operating one or more electric components of the transport vehicle (10).

12. The fuel gas distribution method according to the preceding claim wherein the transport vehicle (10) comprises an electric motor for driving the transport vehicle (10), and the fuel cell delivers electric power to the electric motor.

13. A fuel gas distribution system comprising:
a mobile fuel gas storage vessel (20) containing a liquid and/or compressed fuel gas;
a first transport vehicle (10) comprising a power generator (50) to generate power for the first transport vehicle (10) and a primary fuel gas storage vessel (45) which is fixed to the first transport vehicle (10) and connected with the power generator (50) of the first transport vehicle (10) to supply fuel gas to this power generator (50); and
a second transport vehicle (11) comprising a power generator (51) to generate power for the second transport vehicle (11) and a primary fuel gas storage vessel (46) which is fixed to the second transport vehicle (11) and connected with the power generator (51) of the second transport vehicle (11) to supply fuel gas to this power generator (51);
each of the transport vehicles (10, 11) configured to transport the mobile fuel gas storage vessel (20) to a delivery location for off-loading fuel gas from the mobile fuel gas storage vessel (20) at the delivery location;
wherein the mobile fuel gas storage vessel (20) and/or each of the first transport vehicle (10) and the second transport vehicle (11) is/are provided with a respective connecting line and/or a coupling to provide a connection (40, 42) between the mobile fuel gas storage vessel (20) and the power generator (50; 51) of the respective one of the first and second transport vehicles (10, 11) for transfer of a portion of a residual amount of gaseous fuel gas from the off-loaded mobile fuel gas storage vessel (20) to the power generator (50, 51) of the respective one of the first and second transport vehicles (10, 11);
wherein the mobile fuel gas storage vessel (20) is connected to the power generator (50; 51) of the respective transport vehicle (10; 11) via the primary storage vessel (45; 46) of the respective transport vehicle (10; 11).

## Patentansprüche

1. Brenngasverteilungsverfahren, das folgende Schritte umfasst:
ein mobiles Brenngasvorratsgefäß (20) wird zu einer Lieferstelle transportiert,
Brenngas wird an der Lieferstelle aus dem mobilen Brenngasvorratsgefäß (20) abgeladen, bis das mobile Brenngasvorratsgefäß (20) bis zu einem Aufbrauchgrad aufgebraucht ist, wobei das mobile Brenngasvorratsgefäß (20) eine Restmenge an gasförmigem Brenngas enthält,
eine Verbindung (40) zwischen dem mobilen Brenngasvorratsgefäß (20) und einem Stromerzeuger (50) eines Transportfahrzeugs (10) wird zur Überführung gasförmigen Brenngases vom mobilen Brenngasvorratsgefäß (20) zum Stromerzeuger (50) des Transportfahrzeugs (10) bereitgestellt, und
das mobile Brenngasvorratsgefäß (20) wird unter Verwendung des Transportfahrzeugs (10) transportiert, währenddessen ein Anteil der Restmenge an gasförmigem Brenngas vom mobilen Brenngasvorratsgefäß (20) zum Transportfahrzeug (10) überführt und im Stromerzeuger (50) verbraucht wird, um Strom für das Transportfahrzeug (10) zu erzeugen,
wobei das Transportfahrzeug (10) ein primäres Brenngasvorratsgefäß (45) umfasst, der am Transportfahrzeug (10) befestigt ist,
wobei bei der Überführung des Anteils der Restmenge an Brenngas vom mobilen Brenngasvorratsgefäß (20) zum Transportfahrzeug (10) Brenngas vom mobilen Brenngasvorratsgefäß (20) zum primären Brenngasvorratsgefäß (45) überführt wird, und
wobei das mobile Brenngasvorratsgefäß (20) über das primäre Vorratsgefäß (45) des Transportfahrzeugs (10) mit dem Stromerzeuger (50) des Transportfahrzeugs (10) verbunden ist.

2. Brenngasverteilungsverfahren nach Anspruch 1, wobei das Brenngas an eine Brenngasabgabestation (30) an der Lieferstelle abgeladen wird.

3. Brenngasverteilungsverfahren nach Anspruch 2, das ferner den folgenden Schritt umfasst:
Brenngas wird von der Abgabestation (30) an mehrere Aufnahmegefäße abgegeben,
wobei jedes Aufnahmegefäß der mehreren Aufnahmegefäße ein an Bord eines jeweiligen Fahrzeugs befindliches Bordvorratsgefäß ist.

4. Brenngasverteilungsverfahren nach einem der Ansprüche 1 bis 3, wobei im Schritt, bei dem das mobile Brenngasvorratsgefäß (20) unter Verwendung des Transportfahrzeugs (10) transportiert wird, das mobile Brenngasvorratsgefäß (20) zu einer Nachfüllstation (60) transportiert wird, wobei das Verfahren ferner den folgenden Schritt umfasst:
das mobile Brenngasvorratsgefäß (20) wird an der Nachfüllstation (60) mit Brenngas nachgefüllt.

5. Brenngasverteilungsverfahren nach einem der Ansprüche 1 bis 4, wobei das mobile Brenngasvorratsgefäß (20) eines von mehreren physisch verbundenen mobilen Brenngasvorratsgefäßen (20, 21, 22, 23) ist,
wobei die mehreren physisch verbundenen mobilen Brenngasvorratsgefäße (20, 21, 22, 23) unter Verwendung des Transportfahrzeugs (10) zu einer zweiten Lieferstelle transportiert werden, wobei das Verfahren ferner den folgenden Schritt umfasst:
Brenngas aus einem zweiten mobilen Brenngasvorratsgefäß (21) der mehreren physisch verbundenen mobilen Brenngasvorratsgefäße (20, 21, 22, 23) wird an der zweiten Lieferstelle abgeladen.

6. Brenngasverteilungsverfahren nach einem der Ansprüche 1 bis 5, wobei das mobile Brenngasvorratsgefäß (20) dafür eingerichtet ist, flüssiges Brenngas zu speichern,
wobei das mobile Brenngasvorratsgefäß (20) mit dem Transportfahrzeug (10) zur Lieferstelle transportiert wird,
wobei beim Transport des mobilen Brenngasvorratsgefäßes (20) mit dem Transportfahrzeug (10) ein Anteil des flüssigen Brenngases verdampft und verdampftes gasförmiges Brenngas bildet, und
wobei die Verbindung (40) zwischen dem mobilen Brenngasvorratsgefäß (20) und dem Stromerzeuger (50) des Transportfahrzeugs (10) zur Überführung gasförmigen Brenngases vom mobilen Brenngasvorratsgefäß (20) zum Stromerzeuger (50) des Transportfahrzeugs (10) bereitgestellt wird,
wobei das Verfahren ferner den folgenden Schritt umfasst:
beim Transport des mobilen Brenngasvorratsgefäßes (20) zur Lieferstelle wird das verdampfte gasförmige Brenngas vom mobilen Brenngasvorratsgefäß (20) zum Stromerzeuger (50) des Transportfahrzeugs (10) überführt und verbraucht, um Strom für das Transportfahrzeug (10) zu erzeugen.

7. Brenngasverteilungsverfahren nach einem der Ansprüche 1 bis 5,
wobei das mobile Brenngasvorratsgefäß (20) unter Verwendung eines zweiten Transportfahrzeugs (11) zur Lieferstelle transportiert wird,
wobei im Schritt, bei dem Brenngas abgeladen wird,
das mobile Brenngasvorratsgefäß (20) an der Lieferstelle vom zweiten Transportfahrzeug (11) abgekoppelt und
an der Lieferstelle betriebsmäßig mit einem Brenngasaufnahmeanschluss verbunden wird.

8. Brenngasverteilungsverfahren nach Anspruch 7, wobei das mobile Brenngasvorratsgefäß (20) dafür eingerichtet ist, flüssiges Brenngas zu speichern,
wobei beim Transport des mobilen Brenngasvorratsgefäßes (20) mit dem zweiten Transportfahrzeug (11) ein Anteil des flüssigen Brenngases verdampft und verdampftes gasförmiges Brenngas bildet,
wobei das Verfahren ferner die folgenden Schritte umfasst:
eine Verbindung (42) zwischen dem mobilen Brenngasvorratsgefäß (20) und einem Stromerzeuger (51) des zweiten Transportfahrzeugs (11) wird zur Überführung des gasförmigen Brenngases vom mobilen Brenngasvorratsgefäß (20) zum Stromerzeuger (51) des zweiten Transportfahrzeugs (11) bereitgestellt wird, und
beim Transport des mobilen Brenngasvorratsgefäßes (20) zur Lieferstelle wird das verdampfte gasförmige Brenngas vom mobilen Brenngasvorratsgefäß (20) zum Stromerzeuger (51) des zweiten Transportfahrzeugs (11) überführt und verbraucht, um Strom für das zweite Transportfahrzeug (11) zu erzeugen.

9. Brenngasverteilungsverfahren nach einem der Ansprüche 1 bis 8, wobei im Schritt, bei dem Brenngas abgeladen wird,
das mobile Brenngasvorratsgefäß (20) an der Lieferstelle betriebsmäßig mit einem oder mehreren ortsfesten Vorratsgefäßen (31) verbunden wird und
Brenngas an der Lieferstelle vom mobilen Brenngasvorratsgefäß (20) zu einem oder mehreren ortsfesten Vorratsgefäßen (31) überführt wird.

10. Brenngasverteilungsverfahren nach einem der Ansprüche 1 bis 9, wobei der Stromerzeuger (50) ein Verbrennungsmotor zum Antrieb des Transportfahrzeugs (10) und/oder zur Erzeugung elektrischer Energie zum Betrieb eines oder mehrerer elektrischer Bauteile des Transportfahrzeugs (10) ist.

11. Brenngasverteilungsverfahren nach einem der Ansprüche 1 bis 10, wobei der Stromerzeuger (50) eine Brennstoffzelle zur Erzeugung elektrischer Energie zum Betrieb eines oder mehrerer elektrischer Bauteile des Transportfahrzeugs (10) ist.

12. Brenngasverteilungsverfahren nach dem vorhergehenden Anspruch, wobei das Transportfahrzeug (10) einen Elektromotor zum Antrieb des Transportfahrzeugs (10) umfasst und die Brennstoffzelle dem Elektromotor elektrische Energie liefert.

13. Brenngasverteilungssystem, das Folgendes umfasst:
ein mobiles Brenngasvorratsgefäß (20), das ein flüssiges und/oder komprimiertes Brenngas enthält,
ein erstes Transportfahrzeug (10), das einen Stromerzeuger (50) zur Erzeugung von Strom für das erste Transportfahrzeug (10) und ein primäres Brenngasvorratsgefäß (45) umfasst, das an dem ersten Transportfahrzeug (10) befestigt und mit dem Stromerzeuger (50) des ersten Transportfahrzeugs (10) verbunden ist, um den Stromerzeuger (50) mit Brenngas zu versorgen, und
ein zweites Transportfahrzeug (11), das einen Stromerzeuger (51) zur Erzeugung von Strom für das zweite Transportfahrzeug (11) und ein primäres Brenngasvorratsgefäß (46) umfasst, das an dem zweiten Transportfahrzeug (11) befestigt und mit dem Stromerzeuger (51) des zweiten Transportfahrzeugs (11) verbunden ist, um den Stromerzeuger (51) mit Brenngas zu versorgen,
wobei jedes der Transportfahrzeuge (10, 11) dazu konfiguriert ist, das mobile Brenngasvorratsgefäß (20) zu einer Lieferstelle zu transportieren, um an der Lieferstelle Brenngas aus dem mobilen Brenngasvorratsgefäß (20) abzuladen,
wobei das mobile Brenngasvorratsgefäß (20) und/oder das erste Transportfahrzeug (10) bzw. das zweite Transportfahrzeug (11) mit einer jeweiligen Verbindungsleitung und/oder Kopplung versehen ist/sind, um eine Verbindung (40; 42) zwischen dem mobilen Brenngasvorratsgefäß (20) und dem Stromerzeuger (50; 51) des ersten Transportfahrzeugs (10) bzw. des zweiten Transportfahrzeugs (11) zur Überführung eines Anteils einer Restmenge an gasförmigem Brenngas vom abgeladenen mobilen Brenngasvorratsgefäß (20) zum Stromerzeuger (50; 51) des ersten Transportfahrzeugs (10) bzw. des zweiten Transportfahrzeugs (11) bereitzustellen,
wobei das mobile Brenngasvorratsgefäß (20) über das primäre Vorratsgefäß (45; 46) des jeweiligen Transportfahrzeugs (10; 11) mit dem Stromerzeuger (50; 51) des jeweiligen Transportfahrzeugs (10; 11) verbunden ist.

## Revendications

1. Procédé de distribution de gaz combustible comprenant :
le transport d'un récipient de stockage de gaz combustible mobile (20) vers un point de livraison ;
le déchargement de gaz combustible depuis le récipient de stockage de gaz combustible mobile (20) au point de livraison jusqu'à ce que le récipient de stockage de gaz combustible mobile (20) soit épuisé jusqu'à un niveau d'épuisement, le récipient de stockage de gaz combustible mobile (20) contenant une quantité résiduelle de gaz combustible gazeux ;
le fourniture d'une connexion (40) entre le récipient de stockage de gaz combustible
mobile (20) et un générateur d'énergie (50) d'un véhicule de transport (10) pour transférer de gaz combustible gazeux depuis le récipient de stockage de gaz combustible mobile (20) vers le générateur d'énergie (50) du véhicule de transport (10) ; et
le transport du récipient de stockage de gaz combustible mobile (20) par le véhicule de transport (10) tout en transférant une partie de la quantité résiduelle de gaz combustible gazeux depuis le récipient de stockage de gaz combustible mobile (20) vers le véhicule de transport (10) et la consommant dans le générateur d'énergie (50) pour générer de l'énergie pour le véhicule de transport (10),
le véhicule de transport (10) comprenant un récipient de stockage de gaz combustible primaire (45) qui est fixé au véhicule de transport (10),
le transfert de la partie de la quantité résiduelle de gaz combustible depuis le récipient de stockage de gaz combustible mobile (20) vers le véhicule de transport (10) comprenant le transfert de gaz combustible depuis le récipient de stockage de gaz combustible mobile (20) vers le récipient de stockage de gaz combustible primaire (45), et
le récipient de stockage de gaz combustible mobile (20) étant relié au générateur d'énergie (50) du véhicule de transport (10) par l'intermédiaire du récipient de stockage primaire (45) du véhicule de transport (10).

2. Procédé de distribution de gaz combustible selon la revendication 1, dans lequel le gaz combustible est déchargé vers une station de distribution de gaz combustible (30) au point de livraison.

3. Procédé de distribution de gaz combustible selon la revendication 2, le procédé comprenant en outre
la distribution de gaz combustible depuis la station de distribution (30) vers plusieurs récipients de réception,
chaque récipient de réception des plusieurs récipients de réception étant un récipient de stockage de bord situé à bord d'un véhicule respectif.

4. Procédé de distribution de gaz combustible selon l'une quelconque des revendications 1 à 3, dans lequel le transport du récipient de stockage de gaz combustible mobile (20) par le véhicule de transport (10) comprend le transport du récipient de stockage de gaz combustible mobile (20) vers une station de remplissage (60), le procédé comprenant en outre
le remplissage du récipient de stockage de gaz combustible mobile (20) avec du gaz combustible à la station de remplissage (60).

5. Procédé de distribution de gaz combustible selon l'une quelconque des revendications 1 à 4, dans lequel le récipient de stockage de gaz combustible mobile (20) est l'un de plusieurs récipients de stockage de gaz combustible mobiles physiquement connectés (20, 21, 22, 23),
les plusieurs récipients de stockage de gaz combustible mobiles physiquement connectés (20, 21, 22, 23) étant transportés vers un second point de livraison par le véhicule de transport (10), le procédé comprenant en outre
le déchargement de gaz combustible depuis un deuxième récipient de stockage de gaz combustible mobile (21) des plusieurs récipients de stockage de gaz combustible mobiles physiquement connectés (20, 21, 22, 23) au second point de livraison.

6. Procédé de distribution de gaz combustible selon l'une quelconque des revendications 1 à 5, dans lequel le récipient de stockage de gaz combustible mobile (20) est adapté pour stocker du gaz combustible liquide,
le récipient de stockage de gaz combustible mobile (20) étant transporté vers le point de livraison par le véhicule de transport (10),
une partie du gaz combustible liquide s'évaporant pour former du gaz combustible gazeux vaporisé lors du transport du récipient de stockage de gaz combustible mobile (20) par le véhicule de transport (10), et
la connexion (40) étant fournie entre le récipient de stockage de gaz combustible mobile (20) et le générateur d'énergie (50) du véhicule de transport (10) pour transférer de gaz combustible gazeux depuis le récipient de stockage de gaz combustible mobile (20) vers le générateur d'énergie (50) du véhicule de transport (10),
le procédé comprenant en outre
le transfert du gaz combustible gazeux vaporisé depuis le récipient de stockage de gaz combustible mobile (20) vers le générateur d'énergie (50) du véhicule de transport (10) et la consommation du gaz combustible gazeux vaporisé pour générer de l'énergie pour le véhicule de transport (10) tout en transportant le récipient de stockage de gaz combustible mobile (20) vers le point de livraison.

7. Procédé de distribution de gaz combustible selon l'une quelconque des revendications 1 à 5,
le récipient de stockage de gaz combustible mobile (20) étant transporté vers le point de livraison par un second véhicule de transport (11),
le déchargement de gaz combustible comprenant
le détachement du récipient de stockage de gaz combustible mobile (20) depuis le second véhicule de transport (11) au point de livraison et
la liaison fonctionnelle du récipient de stockage de gaz combustible mobile (20) à un coupleur de réception de gaz combustible au point de livraison.

8. Procédé de distribution de gaz combustible selon la revendication 7, dans lequel le récipient de stockage de gaz combustible mobile (20) est adapté pour stocker du gaz combustible liquide,
une partie du gaz combustible liquide s'évaporant pour former du gaz combustible gazeux vaporisé lors du transport du récipient de stockage de gaz combustible mobile (20) par le second véhicule de transport (11), le procédé comprenant en outre
le fourniture d'une connexion (42) entre le récipient de stockage de gaz combustible mobile (20) et un générateur d'énergie (51) du second véhicule de transport (11) pour transférer le gaz combustible gazeux vaporisé depuis le récipient de stockage de gaz combustible mobile (20) vers le générateur d'énergie (51) du second véhicule de transport (11) et
le transfert du gaz combustible gazeux vaporisé depuis le récipient de stockage de gaz combustible mobile (20) vers le générateur d'énergie (51) du second véhicule de transport (11) et la consommation du gaz combustible gazeux vaporisé pour générer de l'énergie pour le second véhicule de transport (11) tout en transportant le récipient de stockage de gaz combustible mobile (20) vers le point de livraison.

9. Procédé de distribution de gaz combustible selon l'une quelconque des revendications 1 à 8, dans lequel le déchargement de gaz combustible comprend
la liaison fonctionnelle du récipient de stockage de gaz combustible mobile (20) à un ou plusieurs récipients de stockage fixes (31) au point de livraison et
le transfert de gaz combustible depuis le récipient de stockage de gaz combustible mobile (20) vers ledit un ou lesdits plusieurs récipients de stockage fixes (31) au point de livraison.

10. Procédé de distribution de gaz combustible selon l'une quelconque des revendications 1 à 9, dans lequel le générateur d'énergie (50) est un moteur à combustion interne pour entraîner le véhicule de transport (10) et / ou générer de l'énergie électrique pour faire fonctionner un ou plusieurs composants électriques du véhicule de transport (10).

11. Procédé de distribution de gaz combustible selon l'une quelconque des revendications 1 à 10, dans lequel le générateur d'énergie (50) est une pile à combustible pour générer de l'énergie électrique pour faire fonctionner un ou plusieurs composants électriques du véhicule de transport (10).

12. Procédé de distribution de gaz combustible selon la revendication précédente, dans lequel le véhicule de transport (10) comprend un moteur électrique pour entraîner le véhicule de transport (10), la pile à combustible fournissant de l'énergie électrique au moteur électrique.

13. Système de distribution de gaz combustible comprenant :
un récipient de stockage de gaz combustible mobile (20) contenant un gaz combustible liquide et / ou comprimé ;
un premier véhicule de transport (10) comprenant un générateur d'énergie (50) pour générer de l'énergie pour le premier véhicule de transport (10) et un récipient de stockage de gaz combustible primaire (45) qui est fixé au premier véhicule de transport (10) et relié au générateur d'énergie (50) du premier véhicule de transport (10) pour alimenter en gaz combustible le générateur d'énergie (50) ; et
un second véhicule de transport (11) comprenant un générateur d'énergie (51) pour générer de l'énergie pour le second véhicule de transport (11) et un récipient de stockage de gaz combustible primaire (46) qui est fixé au second véhicule de transport (11) et relié au générateur d'énergie (51) du second véhicule de transport (11) pour alimenter en gaz combustible le générateur d'énergie (51),
chacun des véhicules de transport (10, 11) étant configuré pour transporter le récipient de stockage de gaz combustible mobile (20) vers un point de livraison pour décharger de gaz combustible depuis le récipient de stockage de gaz combustible mobile (20) au point de livraison,
le récipient de stockage de gaz combustible mobile (20) et / ou le premier véhicule de transport (10) ou le second véhicule de transport (11) est/sont muni(s) d'une conduite de liaison respective et / ou d'un couplage pour fournir une connexion (40 ; 42) entre le récipient de stockage de gaz combustible mobile (20) et le générateur d'énergie (50 ; 51) du premier véhicule de transport (10) ou du second véhicule de transport (11) pour transférer une partie d'une quantité résiduelle de gaz combustible gazeux depuis le récipient de stockage de gaz combustible mobile déchargé (20) vers le générateur d'énergie (50 ; 51) du premier véhicule de transport (10) ou du second véhicule de transport (11),
le récipient de stockage de gaz combustible mobile (20) étant relié au générateur d'énergie (50 ; 51) du véhicule de transport respectif (10 ; 11) par l'intermédiaire du récipient de stockage primaire (45 ; 46) du véhicule de transport respectif (10 ; 11).
